# EUROPEAN PATENT APPLICATION

(11) **EP 4 726 857 A1**
(43) Date of publication of application: **15.04.2026**
(21) Application number: 24205207.4
(22) Date of filing: 08.10.2024
(51) Int. Cl.: H01M 10/613, H01M 10/625, H01M 10/643, H01M 10/6555, H01M 10/6556, H01M 50/213, H01M 50/249, H01M 50/507

(54) **HOLDING DEVICE FOR ONE OR MORE BATTERY CELLS FOR A VEHICLE, CONNECTION ASSEMBLY FOR ONE OR MORE BATTERY CELLS FOR A VEHICLE, BATTERY ASSEMBLY FOR A VEHICLE, AND METHOD**

(71) Applicant: Volvo Car Corporation, 405 31 Göteborg (SE)
(72) Inventor: KARLSSON, Daniel, 40531 Göteborg (SE)
(74) Representative: Kransell & Wennborg KB

(57) **Abstract**

The disclosure relates to a holding device (20) for one or more battery cells (16) for a vehicle. The holding device (20) comprises a frame member (22), a first interface (24), and at least one second interface (26). The first interface (24) is provided on the frame member (22). The first interface (24) is configured for mechanically connecting an electric busbar (32) or a collector plate to the frame member (22). The at least one second interface (26) is also provided on the frame member (22). The at least one second interface (26) is configured for mechanically connecting at least one electric converter unit (28) to the frame member (22). The at least one second interface (26) and the first interface (24) are overlap-free. Additionally, a connection assembly (18) for one or more battery cells (16) for a vehicle is described. Furthermore, a battery assembly (12) for a vehicle is shown. Also, a method for manufacturing a battery assembly (12) for a vehicle is presented.

## Description

### TECHNICAL FIELD

The present disclosure relates to a holding device for one or more battery cells for a vehicle.

Moreover, the present disclosure is directed to a connection assembly for one or more battery cells for a vehicle.

Additionally, the present disclosure relates to a battery assembly for a vehicle.

Furthermore, the present disclosure is directed to a method for manufacturing a battery assembly for a vehicle.

### BACKGROUND ART

A drivetrain of a battery electric vehicles usually comprises three main components: a battery system, an inverter unit, and an electric machine. The inverter unit is needed for transforming direct current, which is provided by the battery system into alternating current for operating the electric machine. This applies if the electric machine is operated as an electric motor. If the electric machine is operated as an electric generator, the inverter unit transforms alternating current as provided by the electric machine into direct current which may be fed into the battery system, i.e. which may be used for charging the battery system. Each of these three main components, i.e. the battery system, the inverter unit and the electric machine requires space inside the vehicle that cannot be used otherwise.

### SUMMARY

It is therefore an objective of the present disclosure to improve the space requirements of a drivetrain of a battery electric vehicle.

The problem is at least partially solved or alleviated by the subject matter of the independent claims of the present disclosure, wherein further examples are incorporated in the dependent claims.

According to a first aspect, there is provided a holding device for one or more battery cells for a vehicle. The holding device comprises:
- a frame member,
- a first interface provided on the frame member, wherein the first interface is configured for mechanically connecting an electric busbar or a collector plate to the frame member, and
- at least one second interface provided on the frame member, wherein the at least one second interface is configured for mechanically connecting at least one electric converter unit to the frame member,
wherein the at least one second interface and the first interface are overlap-free.

The holding device, more precisely the frame member, may be configured to extend over the one or more battery cells. In other words, the holding device, more precisely the frame member, may be configured to cover the one or more battery cells. The term "provided on" means that the first interface may be integrally formed into the frame member, i.e. the first interface may be comprised by the frame member, or that the first interface may be formed by a component that is connected to the frame member. Since both the first interface and the second interface are configured for a mechanical connect, they may be designated as mechanical connection interfaces. In this context, both the first interface and the second interface may be configured to interact with mechanical connection means such that the respective electric busbar or collector plate and/or the respective electric converter unit can be mechanically connected to the frame member. Such mechanical connection means may comprise an adhesive, a bolt, a bracket, a clip, a screw or any other suitable mechanical connection means. The at least one second interface and the first interface being overlap-free means that they are arranged such that they do not cover or overlap each other on the frame member. In other words, when considering an outer surface or an outer envelope of the frame member, first interface and the at least one second interface are both arranged on the outer surface or the outer envelope, but do not overlap. The at least one second interface and the first interface may also be described as being arranged side by side. In an example, the at least one second interface is located adjacent to an edge of the first interface. In this context, the at least one second interface may be configured for mechanically connecting at least one electric converter unit to the frame member, wherein the electric converter unit is electrically connectable to one battery cell or a group of battery cells. This configuration is advantageous from a packaging point of view. This means that this configuration allows to arrange the at least one electric converter unit in a space saving manner. It is noted that, due to the fact that the at least one second interface is provided on the same frame member as the first interface, the electric converter unit is arrangeable adjacent to the one or more battery cells, i.e. in a battery module or in a battery pack. Thus, it is not necessary any more to provide an electric converter unit as part of an entity that is separate from the battery pack or battery module and the electric machine. This enhances packaging flexibility and improves space requirements. Moreover, the holding device is advantageous from a manufacturing point of view since the fact that the at least one second interface and the first interface are overlap-free facilitates mounting of the electric busbar or collector plate and the electric converter unit. This is due to the fact that interferences between the electric busbar or collector plate and the electric converter unit are avoided or reduced to a minimum during mounting. Moreover, this configuration generally allows to mount the electric busbar or collector plate and the electric converter unit independently from one another.

In an example, the frame member, the first interface, and the at least one second interface are formed as a unitary part. Thus, the holding device is structurally simple. Moreover, such a holding device may be produced in an efficient manner.

According to an example, the first interface and the at least one second interface are arranged at an angle. This means that the first interface and the at least one second interface neither are arranged in the same plane nor are parallel. Thus, the angle may be larger than 0 degrees and smaller than 180 degrees. In an example, the at least one second interface may be arranged perpendicularly to the first interface. This means that the first interface extends in a plane that is perpendicular to a plane in which the second interface extends. Arranging the first interface and the at least one second interface at an angle further facilitates mounting of the busbar or collector plate and the electric converter unit.

According to an example, the at least one second interface comprises a thermal insulation element for thermally insulating the electric converter unit. In more detail, the thermal insulation element may be configured to thermally insulate the electric converter unit with respect to the remaining components of the holding device and/or the one or more battery cells. The thermal insulation element may be configured to reduce heat transfer between the electric converter unit and the frame member and/or the one or more battery cells. Thus, the remaining components of the holding device and/or the one or more battery cells may be protected from heat originating from the electric converter unit. This has the effect that the performance of the remaining components of the holding device and/or the one or more battery cells is not affected by the electric converter unit. Moreover, the lifetime of the remaining components of the holding device and/or the one or more battery cells may be extended.

In an example, the thermal insulation element is made of a ceramics material, or a plastics material, e.g. silicone. It is also possible to use a fiber-reinforced material, e.g. fiber-reinforced plastics material or fiber-reinforces ceramics material. In this context, the fibers may be glass fibers.

In a further example, the thermal insulation element is plate-shaped. This enhances the thermal insulation effect.

According to an example, the at least one second interface is plate-shaped. This means that the at least one second interface extends substantially along two dimensions. A third spatial dimension of the second interface may be very small as compared to these two dimensions. In other words, the second interface may also be designated as board-shaped. Moreover, the plate-shaped second interface may be flat. Being plate-shaped has the effect that the mechanical connection to at least one electric converter unit may be reliable. In more detail, a flat or substantially flat second interface may lead to a secure mechanical connection. Additionally, a mechanical connection process may be facilitated. Further, vibration resistance of the at least one second interface may be improved.

According to an example, the holding device further comprises at least two second interfaces. The at least two second interfaces are arranged in the same plane or in parallel planes. Consequently, at least two electric converter units may be mechanically connected to the frame member. Each of the electric converter units may be electrically connected to a group or subset of battery cells. In this context, each of the battery cells may be electrically connected to one of the electric converter units only. Thus, using the at least two second interfaces, electric converter units may be distributed over the holding device and over one or more battery cells used in connection with the holding device. This allows to arrange the two or more electric converter units in a compact manner. As has been mentioned before, the second interfaces additionally allow to provide the electric converter units adjacent to the one or more battery cells, i.e. in a battery module or in a battery pack. It is understood that it is also possible to have more than two second interfaces such that the above explanations also apply to more than two electric converter units connected to one second interface respectively.

According to an example, the at least two second interfaces are arranged at a distance to each other, if the at least two second interfaces are arranged in the same plane. The distance may ensure a mechanical decoupling of the individual second interfaces in case one or more of the at least two second interfaces experiences a mechanical load. Thus, vibration resistance of the at least two second interfaces may be further improved. Furthermore, this has the effect that undesired interactions or interferences of the two or more electric converter units connected to the two or more second interfaces may be avoided. This, for example, applies to electric interferences between the individual electric converter units and to undesired heat transfer between the individual electric converter units. Thus, the performance and/or product lifetime of such electric converter units may be extended.

According to an example, the at least two second interfaces are arranged on opposite sides of the first interface. This increases the overall weight equilibrium of a holding device equipped with such at least two second interfaces. This has the effect that mechanical loads of the at least two second interfaces may be symmetrically distributed over the holding device. Thus, distortions of the holding device originating from mechanical loads may be reduced or eliminated. Furthermore, such an arrangement of the at least two second interfaces further enhances the possibilities to distribute electric converter units over the holding device.

According to an example, the holding device is made of plastics material. Using plastics material has the effect that the overall weight of the holding device may be small. Further, by using plastics material, the frame member, the first interface and the at least one second interface may be electrically insulated. Thus, a holding device made of plastics material that is positioned on or close to the one or more battery cells reduces the risk of short circuits occurring. Moreover, vibration resistance of the holding device may be further improved.

According to an example in which the holding device, more precisely the frame member, is made from plastics material, the holding device electrically insulates the electric busbar or collector plate from the one or more battery cells. This applies only outside the electric connection points between the one or more battery cells and the associated busbars or elements of the collector plate.

In an example, the holding device may be made of polypropylene. Alternatively, the holding device may be made of polycarbonate-acrylonitrile butadiene styrene or polycarbonate-polybutylene terephthalate. Optionally, the holding device may comprise reinforcement fibers, e.g. glass fibers.

According to a second aspect, there is provided a connection assembly for one or more battery cells for a vehicle. The connection assembly comprises:
- a holding device according to any one of the preceding claims,
- at least one electric busbar or at least one collector plate, wherein the at least one electric busbar or the at least one collector plate is mechanically connected to the first interface of the holding device, and
- at least one electric converter unit, wherein the at least one electric converter unit is mechanically connected to the at least one second interface of the holding device, and wherein the at least one electric converter unit is electrically connected to the at least one electric busbar or the at least one collector plate.

An electric busbar and a collector plate may be understood as a part or assembly of parts configured to electrically connect the electric terminals of the battery cells comprised in a battery module, battery pack or battery assembly to the associated electric terminals of the battery module, battery pack or battery assembly. By mechanically connecting the at least one electric busbar or the at least one collector plate to the at least one first interface and mechanically connecting the at least one electric converter unit to the at least one second interface has the effect that the electrical connection between the at least one electric busbar or the at least one collector plate and the at least one electric converter unit may be realized within the connection assembly. This is efficient both in terms of space needed for this connection and in terms of the ease of establishing such a connection. Thus, few components and/or materials are needed to achieve the electric connection. Consequently, the electric connection may be achieved in an efficient manner, which may also have the effect of improving signal qualities that may be send trough the at least one electric busbar or the at least one collector plate and the at least one electric converter unit. Also, the connection assembly forms one single entity carrying both the at least one electric busbar or the at least one collector plate and the at least one electric converter unit. This single entity may be positioned on or over the one or more battery cells. Thus, the connection assembly may form part of a battery pack, battery module or battery assembly. This facilitates manufacturing and assembly. Moreover, by the mechanical connections mentioned above, the overall size of the connection assembly may be small. This is in particular the case when comparing the connection assembly to an electric converter unit provided as a separate entity.

In an example, the at least one electric busbar or the at least one connector plate is mechanically connected to the first interface via an adhesive substance or an adhesive tape. In this context, an adhesive substance may be a glue.

In a further example, the at least one electric converter unit is mechanically connected to the at least one second interface via an adhesive substance or an adhesive tape. In this context, an adhesive substance may be a glue.

In an example, the at least one electric converter unit is electrically connected to the at least one busbar or the at least one collector plate via one or more weld seams. These weld seams may be generated in a welding process. Therefore, the electric connection may be reliable and space-saving at the same time.

According to an example, the at least one electric converter unit comprises a thermal connection interface connectable or connected to a cooling device. The thermal connection interface may be arranged opposite the at least one second interface or adjacent to the at least one second interface. Thus, heat generated during operation of the electric converter unit may be withdrawn from the electric converter unit This has the effect that the performance of the at least one electric converter unit may be improved, while increasing the product lifetime of the at least one electric converter unit by preventing the electric converter unit from overheating.

According to a third aspect, there is provided a battery assembly for a vehicle. The battery assembly comprises:
- one or more battery cells,
- a connection assembly according to the first aspect,
- wherein the connection assembly is supported on the one or more battery cells and wherein the at least one electric converter unit is electrically connected to the one or more battery cells.

The connection assembly being supported on the one or more battery cells has the effect that the electric connection between the at least one electric converter unit and the one or more battery cells may be reliably achieved and maintained in a stable manner. Moreover, the battery assembly may be designed in a very compact form. This is in particular true, when considering the fact that the at least one electric converter unit forms part of the connection assembly which is a part of the battery assembly. Thus, such a battery assembly does not need an electric converter unit which is provided as an entity separate from the battery assembly. Rather, the present battery assembly comprises the necessary electric converter units such that the battery assembly can provide alternating current which may be directly used for powering an electric machine. Additionally, such a battery assembly is configured to be fed with an alternating current, e.g. produced by an electric machine operated in generator mode and is configured to charge the battery cells based on this alternating current.

According to an example, the battery assembly comprises a plurality of battery cells forming at least two groups of battery cells. The connection assembly comprises at least two electric converter units. One electric converter unit is electrically connected to each of the at least two groups of battery cells. In other words, each electric converter unit may be separately electrically connected to a group of battery cells. This has the effect that the risk of overall electric deficiencies may be decreased in case one battery cell or a group of battery cells being defective. Thus, reliability of the battery assembly may be enhanced. Moreover, using one electric converter unit per group of battery cells enhances packaging flexibility. In simplified words, a plurality of smaller electric converter units, one per group of battery cells, is used instead of using one larger electric converter unit associated with all battery cells. A plurality of smaller electric converter units may be more flexibly arranged than one larger electric converter unit.

According to an example, the battery assembly further comprises at least one cooling device. The cooling device is thermally coupled to the at least one electric converter unit. In this context, the cooling device may be understood as a heat sink or a thermal conductor configured to guide heat away from the at least one electric converter unit. The cooling device being thermally coupled to the at least one electric converter unit has the effect that heat generated by the electric converter unit may be reliably guided away from the at least one electric converter unit. Thus, the risk of overheating of the at least one electric converter unit may be reduced or eliminated. This increases product lifetime of the electric converter unit. Consequently, efficiency of the converter unit may be further improved.

In an example, the cooling device comprises a cooling element and/or a cooling channel. The cooling channel may be configured to guide a coolant, e.g. a liquid. The components of the cooling device may be made of materials that have a relatively high heat conductivity. The cooling device may, for example, be made of metal materials, such as aluminum. The cooling medium may be configured to transfer heat away from the battery cells by passing through the at least one cooling channel. This has the effect that the risk of overheating of the at least one electric converter unit and/or of the battery cells may be further reduced, further increasing product lifetime of the electric converter units and/or of the battery cells. Consequently, efficiency of the converter units and/or of the battery cells may be further improved.

According to an example, the battery assembly comprises a plurality of battery cells. The plurality of battery cells are arranged along at least two parallel lines. This has the effect that the plurality of battery cells are arranged in a compact or spatial efficient manner. Arranging the plurality of battery cells along at least two parallel lines may also facilitate a potential implementation of a cooling device.

In an example, the at least one cooling device is mechanically connected to the plurality of battery cells. The mechanical connection may be achieved using an adhesive substance. Thus, more efficient heat transfer between the plurality of battery cells and the at least one cooling device may be achieved through a secure and reliable connection between the plurality of battery cells and the at least one cooling device.

In another example, the at least one cooling device comprises a thermal interface material. In this context, the thermal interface material may be positioned between the at least one cooling device and the plurality of battery cells or between the cooling device and the at least one electric converter unit. Thus, efficiency of heat transfer is enhanced.

According to a fourth aspect, there is provided a method for manufacturing a battery assembly for a vehicle. The method comprises:
- providing a holding device according to the first aspect or providing a connection assembly according to the second aspect,
- providing one or more battery cells, and
- mechanically and electrically coupling the holding device or the connection assembly to the one or more battery cells.

Mechanically coupling the holding device or the connection assembly to the one or more battery cells has the effect that a reliable and stable connection between the holding device or the connection assembly and the one or more battery cells may be achieved. This is important in case mechanical loads or vibrations apply on the battery assembly. Electrically coupling the holding device or the connection assembly to the one or more battery cells has the effect that an electric current can flow. Thus, electric energy may be provided by the one or more battery cells to the holding device or the connection assembly. This electric energy may then be used for driving an electric machine. Also, electric energy provided at the holding device or connection assembly may be used for charging the battery cells. As has been mentioned before, by manufacturing such battery assembly, components for enabling inverter functionalities may be provided directly on or in the battery assembly. A further advantage of this method is that the holding device or the connection assembly may be premanufactured and then coupled to the one or more battery cells in the mechanical and electric sense.

In an example, mechanically coupling the holding device or the connection assembly to the one or more battery cells comprises a use of an adhesive or an adhesive tape. Thus, the mechanical coupling may be facilitated.

In an example, electrically coupling the holding device or the connection assembly to the one or more battery cells comprises a use of a welding process. Thus, a reliable electrical coupling may be achieved.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle having a battery assembly according to the present disclosure comprising a connection assembly according to the present disclosure, wherein the connection assembly comprises a holding device according to the present disclosure, and wherein the battery assembly is manufactured using a method according to the present disclosure,
- Figure 2: shows the battery assembly of Figure 1 in a more detailed view, wherein just a portion of the battery cells of the battery assembly and only one connecting assembly are shown,
- Figure 3: shows a sectional view along plane III of the battery assembly of Figure 2,
- Figure 4: schematically shows a detail of the battery assembly of Figure 2 as seen from a perspective IV,
- Figure 5: illustrates steps of the method according to the present disclosure for manufacturing a battery assembly for a vehicle,
- Figure 6: schematically shows the connection assembly in a partially assembled state during execution of the method according to the present disclosure, and
- Figure 7: shows the battery assembly in another partially assembled state during execution of the method according to the present disclosure.

### DETAILED DESCRIPTION

The Figures are merely schematic representations and serve only to illustrate examples of the disclosure. Identical or equivalent elements are in principle provided with the same reference signs.

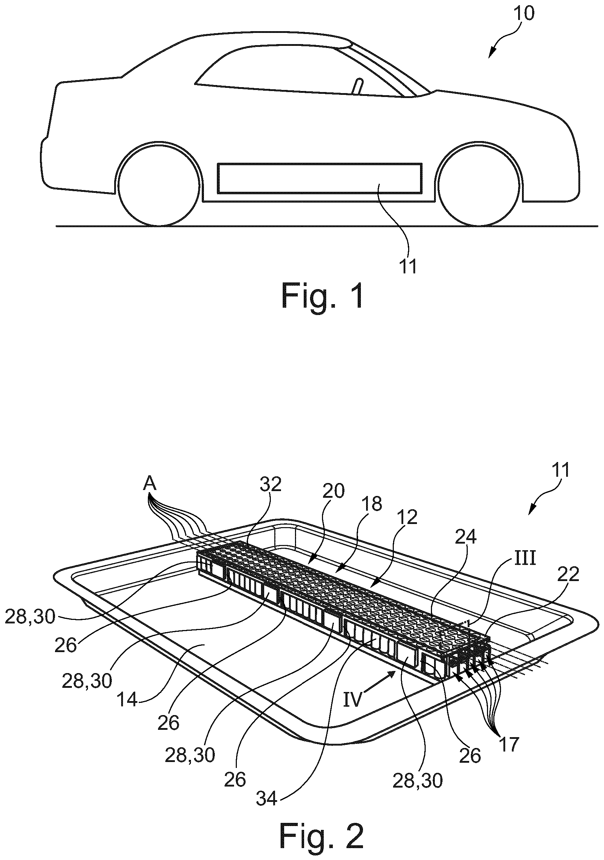

Figure 1 shows a vehicle 10 comprising a battery system 11 which may als be called a battery pack. The battery system 11 is part of a drivetrain. Thus, the electric energy stored in the battery system 11 may be used to power the vehicle 10. Thus, in the present example, the vehicle 10 is a battery electric vehicle.

The battery system 11 comprises a pan-shaped bottom part 14 and a top part (not shown) covering the bottom part 14 (see Figure 2). The bottom part 14 and the top part (not shown) form an enclosure or housing of the battery system 11 which is configured to enclose a plurality of battery cells.

The battery system 11 further comprises a plurality of battery cells 16.

In the present example, the battery cells 16 are cylindrical battery cells 16. This means that a general shape of each of the battery cells 16 resembles a circular cylinder.

The plurality of battery cells 16 are located in the pan-shaped bottom part 14.

It is noted that in Figure 2 the plurality of battery cells 16 only form a portion, more precisely one fourth, of the total number of battery cells 16. This portion of the battery cells 16 corresponds to the battery cells 16 which form part of one battery assembly 12 and which are associated with one connection assembly 18 as will be explained in more detail further below.

The plurality of battery cells 16 are arranged along six parallel lines A. In other words, the plurality of battery cells 16 are arranged in six rows, wherein the rows extend in parallel to each other. These battery cells 16 form part of a battery assembly 12.

Even though the battery system 11 of Figures 1 and 2 comprises a total of four battery assemblies 12, only one thereof is represented in Figure 2 for reasons of better visibility.

The battery assembly 12 further comprises cooling units 17 for cooling the plurality of battery cells 16. In the example of Figure 2, the battery assembly 12 comprises five cooling units 17.

Moreover, in the present example, the cooling units 17 are elongated and are arranged in parallel to each other. Further, each cooling unit is arranged between two rows of battery cells 16.

The battery assembly 12 further comprises a connection assembly 18.

The connection assembly 18 is supported on the plurality of battery cells 16.

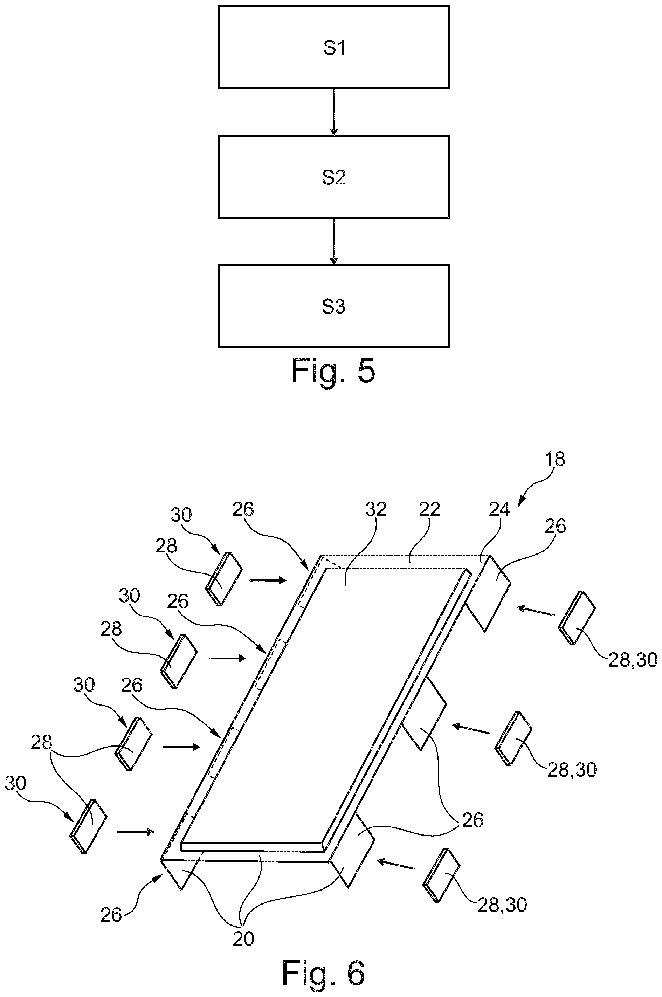

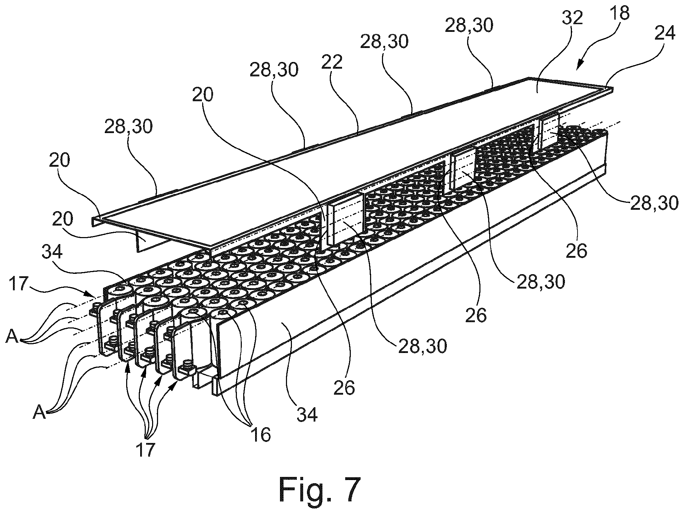

The connection assembly 18 comprises a holding device 20 (see also Figures 6 and 7).

In the present example, the holding device 20 is made of plastics material. In more detail, the holding device 20 is made of polycarbonate-acrylonitrile butadiene styrene.

The holding device 20 comprises a frame member 22. The frame member 22 substantially extends along the six parallel lines A and portions of the frame member 22 extend perpendicular to the six parallel lines A.

The holding device 20 further comprises a first interface 24. The first interface 24 is provided on the frame member 22. The first interface 24 is substantially planar and a plurality of electric busbars 32 or a collector plate is mechanically connected to the first interface 24. In the examples, shown in the Figures, the electric busbars are schematically represented by a plate.

The holding device 20 further comprises seven second interfaces 26. Each second interface 26 is provided on the frame member 22. Each second interface 26 is plate-shaped and comprises a thermal insulation element. In the present example, each thermal insulation element is made of ceramic material.

In more detail, the first interface 24 extends in a first plane. The second interfaces 26 are distributed over two planes, wherein these two planes are perpendicular with respect to the first plane and parallel to one another.

Four of the seven second interfaces 26 are arranged in the same plane. The remaining three of the seven second interfaces 26 are arranged in another plane. This means that four second interfaces 26 are arranged in the same plane and in a parallel plane to the other three second interfaces 26 that are also arranged in another same plane.

Further, the seven second interfaces 26 are arranged at a distance to each other. In other words, the seven second interfaces 26 do not directly touch each other.

The seven second interfaces 26 and the first interface 24 are arranged without overlapping each other, meaning overlap-free. In other words, each of the second interfaces 26 and the first interface 24 do not overlap.

Further, as has been mentioned before, the first interface 24 and the seven second interfaces 26 are arranged at an angle of 90°.

Furthermore, the two planes in which the second interfaces 26 are arranged are provided on opposite sides, i.e. at opposite edges, of the first interface 24.

In the present example, the frame member 22, the first interface 24, and the seven second interfaces 26 are formed as a unitary part of the holding device 20.

The connection assembly 18 further comprises seven electric converter units 28.

Each electric converter unit 28 is mechanically connected to the frame member 22. In more detail, each of the seven electric converter units 28 is mechanically connected to the frame member 22 via one of the seven second interfaces 26.

Further, each electric converter unit 28 is thermally insulated by the thermal insulation element of the respective second interface 26 with respect to the remaining components of the holding device 20 and the plurality of battery cells 16.

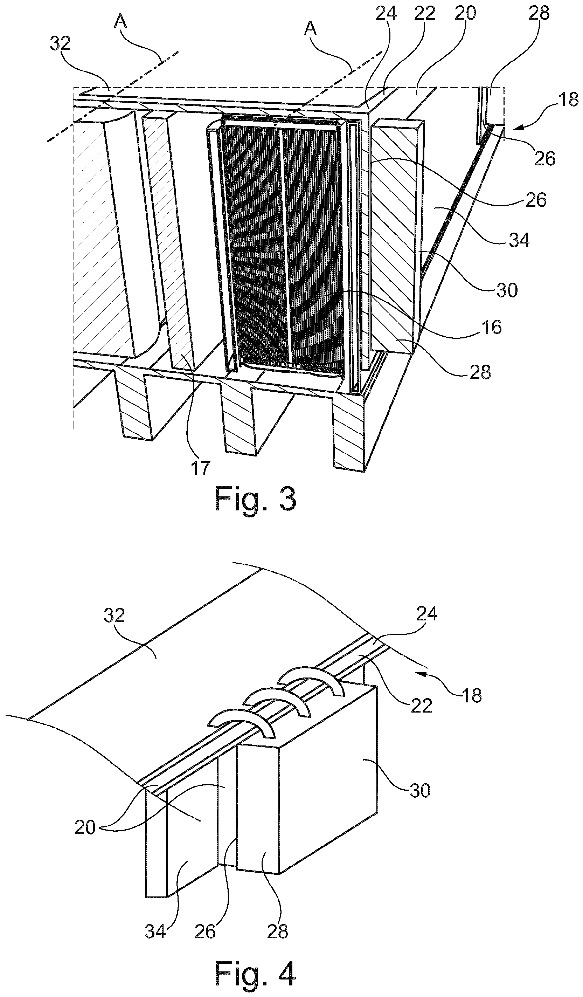

The seven electric converter units 28 are each electrically connected to an associated group of the plurality of battery cells 16. This is done via the electric busbars 32 (cf. Figure 4).

In more detail, each of the seven electric converter units 28 is electrically connected to one of seven groups of battery cells 16.

Each electric converter unit 28 also comprises a thermal connection interface 30. Further, the thermal connection interface 30 is arranged opposite the second interface 26. In other words, each thermal connection interface 30 faces away from the respective second interface 26.

The battery assembly 12 further comprises two cooling devices 34. More precisely, these two cooling devices 34 are associated with the connection assembly 18.

Both cooling devices 34 are essentially formed as elongated cooling channels having a rectangular cross section respectively and configured to guide a coolant.

One cooling device 34 is thermally coupled to four of the seven second interfaces 26 arranged in the same plane. Thus, the one cooling device 34 is thermally coupled to four of the seven electric converter units 28.

The other cooling device 34 is thermally coupled to the remaining three of the seven second interfaces 26 arranged in the other plane. This means that the other cooling device 34 is thermally coupled to the remaining three of the seven electric converter units 28.

In summary, the battery assembly 12 is formed by the plurality of battery cells 16 as shown in Figure 2, and by the connection assembly 18, wherein the connection assembly 18 comprises the holding device 20, the electric busbars 32 and the electric converter units 28, in the present example the seven electric converter units 28.

In the example shown in the figures, the first interface 24 of the frame member 22 of the holding device 20 is formed by a surface of a central plate-shaped portion of the frame member 22. The electric busbars 32 are mechanically connected to the first interface 24.

Four out of the seven second interfaces 26 are provided on four plate-shaped extensions of the frame member 22. These four plate-shaped extensions extend from the same edge of the central plate-shaped portion of the frame member 22 and are oriented into the same direction. Each of these four plate-shaped extensions is oriented substantially perpendicularly to the central plate-shaped portion.

The remaining three out of the seven second interfaces are provided on additional three plate-shaped extensions of the frame member 22. These three plate-shaped extensions extend from the same edge of the central plate-shaped portion of the frame member 22 and are oriented into the same direction. The edge from which the remining three plate-shaped extensions extend is arranged opposite the edge of the central plate-shaped portion from which the four plate-shaped extensions extend as has been explained above. However, all seven plate-shaped extensions extend into the same direction and all seven plate-shaped extensions are oriented substantially perpendicularly to the central plate-shaped portion.

An electric converter unit 28 is mechanically connected to each of the seven second interfaces 26.

The battery assembly 12 may be manufactured for the vehicle 10 in accordance with the following method (see Figures 5 to 7).

In a first step S 1 of the method, the holding device 20 is provided.

In the present example, the seven electric converter units 28 and the electric busbar 32 are provided.

The electric busbar 32 is mechanically connected to the first interface 24.

The seven electric converter units 28 are mechanically connected to the seven second interfaces 26 by gluing each electric converter unit 28 to the respective second interface 26.

Further, the seven electric converter units 28 are electrically coupled to the electric busbar 32 by a welding process.

It is noted that the holding device 20, the seven electric converter units 28 and the electric busbars 32 form the connection assembly 18 as a unitary part.

In a second step S2 of the method, the plurality of battery cells 16 is provided.

In more detail, the plurality of battery cells 16 are arranged along the six parallel lines A as can also be seen from Figure 2. This may also involve providing cooling units 17.

In the present example, also the two cooling devices 34 are provided and then mechanically connected to the plurality of battery cells 16 by gluing each cooling device 34 to the associated side of the plurality of battery cells 16.

In a third step S3 of the method, the holding device 20 is mechanically and electrically coupled to the plurality of battery cells 16.

In more detail, the holding device 20, the seven electric converter units 28 and the electric busbar 32 are placed on the plurality of battery cells 16. Thus, the second interfaces 26 are touching the respectively associated cooling devices 34. Consequently, the electric converter units 28 are thermally coupled to the cooling devices 34.

Further, in the present example, each of the seven electric converter units 28 is electrically connected to each of the seven groups of battery cells 16.

Moreover, in the present example, the connection assembly 18 is arranged in the pan-shaped bottom part 14.

It is understood that the same method may be executed for the remaining battery cells of the battery assembly 12 such that in the end, a total of four battery assemblies 12 is provided in the pan-shaped bottom part 14.

As used herein, the phrase "at least one" in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 11: battery system
- 12: battery assembly
- 14: bottom part
- 16: battery cell
- 17: cooling unit
- 18: connection assembly
- 20: holding device
- 22: frame member
- 24: first interface
- 26: second interface
- 28: electric converter unit
- 30: thermal connection interface
- 32: electric busbar
- 34: cooling device

- A: line

- S 1: first step
- S2: second step
- S3: third step

## Claims

1. A holding device (20) for one or more battery cells (16) for a vehicle (10), the holding device (20) comprising:
- a frame member (22),
- a first interface (24) provided on the frame member (22), wherein the first interface (24) is configured for mechanically connecting an electric busbar (32) or a collector plate to the frame member (22), and
- at least one second interface (26) provided on the frame member (22), wherein the at least one second interface (26) is configured for mechanically connecting at least one electric converter unit (28) to the frame member (22),
wherein the at least one second interface (26) and the first interface (24) are overlap-free.

2. The holding device (20) of claim 1, wherein the first interface (24) and the at least one second interface (26) are arranged at an angle.

3. The holding device (20) of claim 1 or 2, wherein the at least one second interface (26) comprises a thermal insulation element for thermally insulating the electric converter unit (28).

4. The holding device (20) of any one of the preceding claims, wherein the at least one second interface (26) is plate-shaped.

5. The holding device (20) of any one of the preceding claims, comprising at least two second interfaces (26), wherein the at least two second interfaces (26) are arranged in the same plane or in parallel planes.

6. The holding device (20) of claim 5, wherein the at least two second interfaces (26) are arranged at a distance to each other, if the at least two second interfaces are arranged in the same plane.

7. The holding device (20) of claim 5 or 6, wherein the at least two second interfaces (26) are arranged on opposite sides of the first interface (24).

8. The holding device (20) of any one of the preceding claims, wherein the holding device (20) is made of plastics material.

9. A connection assembly (18) for one or more battery cells (16) for a vehicle (10), the connection assembly (18) comprising:
- a holding device (20) according to any one of the preceding claims,
- at least one electric busbar (32) or at least one collector plate, wherein the at least one electric busbar (32) or the at least one collector plate is mechanically connected to the first interface (24) of the holding device (20), and
- at least one electric converter unit (28), wherein the at least one electric converter unit (28) is mechanically connected to the at least one second interface (26) of the holding device (20), and wherein the at least one electric converter unit (28) is electrically connected to the at least one electric busbar (32) or the at least one collector plate.

10. The connection assembly (18) of claim 9, wherein the at least one electric converter unit (28) comprises a thermal connection interface (30) connectable or connected to a cooling device.

11. A battery assembly (12) for a vehicle (10), the battery assembly (12) comprising:
- one or more battery cells (16),
- a connection assembly (18) of claim 9 or 10,
- wherein the connection assembly (18) is supported on the one or more battery cells (16) and wherein the at least one electric converter unit (28) is electrically connected to the one or more battery cells (16).

12. The battery assembly (12) of claim 11, wherein the battery assembly (12) comprises a plurality of battery cells (16) forming at least two groups of battery cells (16) and wherein the connection assembly (18) comprises at least two electric converter units (28), wherein one electric converter unit (28) is electrically connected to each of the at least two groups of battery cells (16).

13. The battery assembly (12) of claim 11 or 12, further comprising at least one cooling device (34), wherein the cooling device (34) is thermally coupled to the at least one electric converter unit (28).

14. The battery assembly (12) of any one of claims 11 to 13, wherein the battery assembly (12) comprises a plurality of battery cells (16) and wherein the plurality of battery cells (16) are arranged along at least two parallel lines (A).

15. A method for manufacturing a battery assembly (12) for a vehicle (10), the method comprising:
- providing a holding device (20) according to any one of claims 1 to 8 or providing a connection assembly (18) according to claim 9 or 10,
- providing one or more battery cells (16), and
- mechanically and electrically coupling the holding device (20) or the connection assembly (18) to the one or more battery cells (16).
